# EUROPÄISCHE PATENTSCHRIFT

(11) **EP 2 388 679 B1**
(45) Veröffentlichungstag und Bekanntmachung des Hinweises auf die Patenterteilung: **20.04.2016**
(21) Anmeldenummer: 11163127.1
(22) Anmeldetag: 20.04.2011
(51) Int. Cl.: G06F 1/26, G06F 1/24

(54) **Elektronische Einrichtung und Verfahren zum Abschalten und Wiedereinschalten einer Betriebsspannung**
Electronic device and method for deactivating and reactivating an operating voltage
Dispositif électronique et procédé de mise hors tension ou de remise sous tension d'une tension de fonctionnement

(30) Priorität: 19.05.2010 DE 102010021086
(43) Veröffentlichungstag der Anmeldung: 23.11.2011
(73) Patentinhaber: Vodafone GmbH, 40549 Düsseldorf (DE)
(72) Erfinder: Joppek, Franz-Josef, 47495 Rheinberg (DE)
(74) Vertreter: Müller & Schubert

(56) Entgegenhaltungen:
- EP-A2- 1 496 436
- US-A- 6 147 682
- US-A1- 2005 289 257
- US-B1- 6 415 342

## Beschreibung

Die vorliegende Erfindung betrifft eine elektronische Einrichtung sowie ein Verfahren zum Abschalten und Wiedereinschalten einer Betriebsspannung an einem Port zum Verbinden eines elektronischen Geräts mit einer Rechnereinrichtung gemäß den Oberbegriffen der Patentansprüche 1 und 9.

Insbesondere betrifft die vorliegende Erfindung eine elektronische Einrichtung sowie ein Verfahren zum Abschalten und Wiedereinschalten einer Betriebsspannung an einem USB-Port zum Verbinden einer USB-Einrichtung mit einer Rechnereinrichtung.

Bei einer USB-Einrichtung handelt es sich in der Regel um ein Gerät, das mittels USB (Universal Serial Bus) an einer Rechnereinrichtung angeschlossen wird beziehungsweise ist. Bei USB handelt es sich generell um ein serielles Bussystem zur Verbindung einer Rechnereinrichtung, beispielsweise eines Computers, mit externen Geräten, beispielsweise USB-Datenspeichern und dergleichen.

Nach einem Neustart (Reboot) einer Rechnereinrichtung, beispielsweise eines Personal Computers, eines Notebooks oder dergleichen, bleibt die Betriebsspannung an den USB-Ports erhalten. Ein angeschlossenes USB-Gerät, beispielsweise ein USB- Daten-Stick, wird weiterhin mit Spannung versorgt. Eine fehlerhafte Kommunikation des USB-Gerätes mit der Rechnereinrichtung kann somit nicht durch einen Neustart aufgehoben werden. Es ist deshalb notwendig, die Spannungsversorgung des USB-Gerätes zu trennen. Dies kann nur durch ein Herausziehen des USB-Gerätes aus der Rechnereinrichtung oder durch Abschaltung der Rechnereinrichtung erreicht werden.

Diese Vorgehensweise ist für viele Anwendungsbereiche nicht akzeptabel, beispielsweise dann, wenn viele USB-Geräte an einer Rechnereinrichtung angeschlossen sind, wenn automatische Messeinrichtungen mit USB-Geräten verwendet werden, und dergleichen.

In der EP 1 496 436 A1 wird eine Lösung zum automatischen "Reseten" einer USB Smart Card beschrieben, die sich im "Mute"-Modus befindet. Dieser "Reset" erfolgt durch eine Unterbrechung der Stromversorgung und führt zu einem unerwünschten Datenverlust.

Der vorliegenden Erfindung liegt die Aufgabe zugrunde, eine elektronische Einrichtung sowie ein Verfahren bereitzustellen, mittels derer/dessen die geschilderten Nachteile vermieden werden können. Insbesondere soll erreicht werden, dass bei einem Neustart einer Rechnereinrichtung auch die Betriebsspannung am Port auf einfache Weise abgeschaltet und wieder eingeschaltet werden kann.

Diese Aufgabe wird erfindungsgemäß gelöst durch die elektronische Einrichtung mit den Merkmalen gemäß dem unabhängigen Patentanspruch 1 sowie das Verfahren mit den Merkmalen gemäß dem unabhängigen Patentanspruch 9. Weitere Merkmale und Details der Erfindung ergeben sich aus den Unteransprüchen, der Beschreibung sowie den Zeichnungen. Dabei gelten Merkmale und Details, die im Zusammenhang mit der erfindungsgemäßen elektronischen Einrichtung beschrieben sind, selbstverständlich auch im Zusammenhang mit dem erfindungsgemäßen Verfahren, und umgekehrt, so dass hinsichtlich der Offenbarung zwischen den beiden Erfindungsaspekten wechselseitig aufeinander Bezug genommen und verwiesen wird.

Der erfinderische Grundgedanke besteht darin, dass nunmehr ein automatisches Abschalten und verzögertes Wiedereinschalten der Betriebsspannung am Port erfolgt, beispielsweise während des Neustarts der Rechnereinrichtung.

Realisiert wird dieser erfinderische Grundgedanke gemäß dem ersten Aspekt der Erfindung durch eine elektronische Einrichtung zum Abschalten und Wiedereinschalten einer Betriebsspannung an einem Port zum Verbinden eines elektronischen Geräts mit einer Rechnereinrichtung. Die elektronische Einrichtung ist erfindungsgemäß dadurch gekennzeichnet, dass diese zum automatischen Abschalten und zum automatischen verzögerten Wiedereinschalten der Betriebsspannung an dem Port ausgebildet ist, dass die Einrichtung dazu eine Detektoreinrichtung zum Auskoppeln eines Signals zum Steuern der elektronischen Einrichtung aus einem von der Rechnereinrichtung abgehenden Steuersignal aufweist, dass die Einrichtung eine elektronische Schaltung zum Aufbereiten des erfassten Signals in ein Steuersignal für die elektronische Einrichtung aufweist und dass die Einrichtung eine Zeitschaltungseinrichtung zum Einstellen einer Zeitverzögerung für das Wiedereinschalten der Betriebsspannung aufweist. Wie dies im Einzelnen realisiert werden kann, wird nachfolgend in größerem Detail beschrieben, ohne dass die Erfindung auf die vorteilhaften, jedoch nicht ausschließlichen Ausführungsbeispiele beschränkt ist.

Insbesondere kann die elektronische Einrichtung zum Abschalten und Wiedereinschalten einer Betriebsspannung an einem USB-Port zum Verbinden einer USB-Einrichtung mit einer Rechnereinrichtung vorgesehen sein. Natürlich kann die elektronische Einrichtung auch für andere elektronische Geräte genutzt werden, so dass die Erfindung nicht auf dieses konkrete Ausführungsbeispiel beschränkt ist.

Durch die vorliegende Erfindung wird insbesondere ein automatisches Abschalten und verzögertes Wiedereinschalten der Betriebsspannung an einem Port, beispielsweise an einem USB-Port ermöglicht, beispielsweise nach einem Neustart (Reboot) der Rechnereinrichtung. Ein verzögertes Einschalten ist insbesondere für ein stabiles Verhalten des Betriebssystems von Vorteil. Die erfindungsgemäße elektrische Einrichtung und das erfindungsgemäße Verfahren erfüllen die dabei gestellten und oben genannten Anforderungen.

Die elektronische Einrichtung dient zum Abschalten und Wiedereinschalten einer Betriebsspannung an einem Port.

Bei einem Port handelt es sich insbesondere um einen Anschluss oder eine Schnittstelle.

Über diesen Port kann ein elektronisches Endgerät mit einer Rechnereinrichtung verbunden werden. Dabei ist die Erfindung nicht auf bestimmte Typen von Rechnereinrichtungen beschräkt. Bei einer Rechnereinrichtung kann es sich beispielsweise um einen Computer, einen Personal Computer, ein Notebook und dergleichen handeln. Ebenso ist die vorliegende Erfindung nicht auf bestimmte Typen elektronischer Geräte beschränkt, die mit der Rechnereirichtung verbunden sind oder werden.

Der Anschluss des elektronischen Geräts an der Rechnereinrichtung erfolgt nunmehr über die elektronische Einrichtung.

Dabei kann beispielsweise vorgesehen sein, dass die elektronische Einrichtung in der Rechnereinrichtung vorgesehen oder ausgebildet ist und/oder dass die elektronische Einrichtung in dem an der Rechnereinrichtung anzuschließenden elektronischen Gerät vorgesehen oder ausgebildet ist.

In einem solchen Fall bildet die elektronische Einrichtung den funktionalen Abschluss des Ports.

In anderer Ausgestaltung kann vorgesehen sein, dass die elektronische Einrichtung als separates Bauteil ausgebildet ist und vorliegt, das über geeignete Schnittstellen sowohl mit der Rechnereinrichtung als auch mit dem daran anzuschließenden elektronischen Gerät verbunden werden kann. In diesem Fall erfolgt die Verbindung des elektronischen Geräts mit der Rechnereinrichtung über die Zwischenschaltung der elektronischen Einrichtung.

Vorzugsweise handelt es sich bei dem elektronischen Gerät um eine USB-Einrichtung, die über einen USB-Port mit der Rechnereinrichtung verbunden oder verbindbar ist. Bei einer USB-Einrichtung kann es sich insbesondere um jede Form von USB-Gerät handeln, beispielsweise einen USB-Datenspeicher - einen so genannten USB-Datenstick -, eine automatische USB-Messeinrichtung, beispielsweise eine USB-Sensoreinrichtung, und dergleichen.

Erfindungsgemäß ist nunmehr vorgesehen, dass die elektronische Einrichtung zum automatischen Abschalten und Wiedereinschalten ausgebildet ist, und dass das Wiedereinschalten verzögert erfolgt. Das bedeutet, dass im Falle eines USB-Geräts dieses nicht mehr von der Rechnereinrichtung abgezogen werden muss, oder dass die Rechnereinrichtung abgeschaltet werden muss, etwa im Falle einer fehlerhaften Kommunikation.

Wenn die Unterbrechung der Betriebsspannung am Port erfolgte, wird diese zeitverzögert, und zwar automatisch, wieder bereitgestellt. Die Betriebsspannung wird somit für den Zeitraum der gegebenen Zeitverzögerung unterbrochen. Nach Ablauf der gegebenen Zeitverzögerung wird die Betriebesspannung am Port automatisch wieder eingeschaltet beziehungsweise bereitgestellt.

Durch die erfindungsgemäße Ausgestaltung kann nunmehr insbesondere erreicht werden, dass wenn eine Rechnereinrichtung neu gestartet wird, auch die Betriebsspannung am Port unterbrochen wird, so dass ein angeschlossenes elektronisches Gerät nicht mehr mit Spannung versorgt wird. Nach Ablauf der gegebenen Zeitverzögerung wird das über den Port angeschlossene elektronische Gerät automatisch wieder mit Spannung versorgt.

Um ein automatisches Abschalten und verzögertes Wiedereinschalten zu realisieren, ist in der elektronischen Einrichtung erfindungsgemäß eine Detektoreinrichtung zum Auskoppeln eines Signals zum Steuern der elektronischen Einrichtung aus einem von der Rechnereinrichtung abgehenden Steuersignal vorgesehen. Bei dem ausgekoppelten Signal kann es sich beispielsweise um ein Auslösesignal, ein so genanntes Triggersignal, handeln. Bei dem von der Rechnereinrichtung abgehenden Steuersignal kann es sich beispielsweise um ein Steuer-Eingangssignal handeln, das zu Steuerung anderer Komponenten dient, die mit der Rechnereinrichtung verbunden sind. Aus dem von der Rechnereinrichtung abgehenden Steuersignal wird durch die Detektoreinrichtung, bei der es sich insbesondere um eine Detektorschaltung handeln kann, ein Signal ausgekoppelt, welches anschließend zur Steuerung der elektronischen Einrichtung verwendet wird.

Bevorzugt, jedoch nicht ausschließlich, kann die Detektoreinrichtung zum Auskoppeln eines Signals in Form eines Synchronisationssignals, insbesondere eines V-Sync-Signals, aus einem VGA-Signal ausgebildet sein. Ein VGA-Anschluss ist insbesondere ein analoger Bildübertragungsstandard für Verbindungen, beispielsweise Steckerverbindungen und Kabelverbindungen, zwischen einer Rechnereinrichtung, beispielsweise einer Grafikkarte innerhalb einer Rechnereinrichtung, und einem Anzeigegerät, beispielsweise einem Monitor. Ein VGA-Video-Signal weist mehrere aktive Signale auf, unter anderem digitale Signale, die zur Synchronisation benötigt beziehungsweise verwendet werden. Eines dieser Synchronisationssignale ist das vertikale Synchronisationssignal, das so genannte V-Sync-Signal. In einer solchen Ausführungsform wird aus dem VGA-Eingangssignal, dem so genannten VGA-IN-Signal, durch die Detektoreinrichtung, beispielsweise eine Detektorschaltung, das V-Sync-Signal ausgekoppelt. Alle VGA-Signale werden jedoch vollständig, das heißt eins zu eins, zum VGA-Ausgang, dem so genannten VGA-OUT, weitergeleitet und stehen dort für einen Monitoranschluss zur Verfügung. Weiterhin weist die elektronische Einrichtung erfindungsgemäß eine elektronische Schaltung zum Aufbereiten des erfassten Signals in ein Steuersignal für die elektronische Einrichtung auf. Das detektierte Signal wird über diese weitere elektronische Schaltung aufbereitet und steuert dann anschließend die elektronische Einrichtung. Beispielsweise kann vorgesehen sein, dass die elektronische Schaltung zum Aufbereiten des erfassten Signals in ein Steuersignal zum Steuern einer Schaltereinrichtung in der elektronischen Einrichtung ausgebildet ist. Beispielsweise kann vorgesehen sein, dass die Steuerung in einer Weise erfolgt, beispielsweise durch eine entsprechende Aktivierung der Schaltereinrichtung, dass die Spannungsversorgung am Port unterbrochen wird. Insbesondere ist dabei realisierbar, dass die Spannungsversorgung am Port nach einem erfolgten Neustart der Rechnereinrichtung erfolgt.

Weiterhin ist erfindungsgemäß eine, insbesondere einstellbare, Zeitschaltungseinrichtung zum Einstellen einer Zeitverzögerung für das Wiedereinschalten der Betriebsspannung vorgesehen. Das von der Detektoreinrichtung detektierte Signal, das insbesondere über eine weitere elektronische Schaltung aufbereitet worden ist, steuert dann über die, insbesondere einstellbare Zeitschaltung, die elektronische Einrichtung, beispielsweise eine darin vorgesehene Schaltereinrichtung. Die elektronische Einrichtung, beispielsweise durch eine entsprechende Betätigung der Schaltereinrichtung, unterbricht die Spannungsversorgung am Port, beispielsweise nach einem erfolgten Neustart der Rechnereinrichtung, gemäß der von der Zeitschaltungseinrichtung vorgegebenen Zeitverzögerung. Beispielsweise kann vorgesehen sein, dass über die Zeitschaltungseinrichtung eine Zeitverzögerung von größer als fünf Sekunden, vorzugsweise von größer als zehn Sekunden, bevorzugt von größer als 15 Sekunden, besonders bevorzugt für achtzehn oder ungefähr achtzehn Sekunden eingestellt wird.

Nachfolgend wird hierzu ein bevorzugtes Ausführungsbeispiel beschrieben. Nach einem Neustart der Rechnereinrichtung wird von der Rechnereinrichtung an den Monitor ein VGA-Signal ausgegeben. Aus dem VGA-Signal wird von der Detektoreinrichtung das V-Sync-Signal ausgekoppelt. Das V-Sync-Signal wir zu einem Steuersignal für die elektronische Einrichtung aufbereitet. Durch das Steuersignal wird die elektronische Einrichtung angesteuert, so dass die Spannungsversorgung am Port unterbrochen wird, beispielsweise indem die Schaltereinrichtung betätigt wird. Nach dem Ablauf der von der Zeitschaltungseinrichtung vorgegebenen Zeitverzögerung, beispielsweise nach etwa achtzehn Sekunden, wird die Spannungsversorgung wieder eingeschaltet, so dass erneut eine Betriebesspannung am Port für das angeschlossene elektronische Gerät, beispielsweise ein USB-Gerät, zur Verfügung steht.

Beispielsweise kann eine Anzeigeeinrichtung zum Anzeigen des Funktionsstatus der elektronischen Einrichtung vorgesehen. Über diese Anzeigeeinrichtung, die beispielsweise als LED oder dergleichen ausgebildet sein kann, kann der Status der elektronischen Einrichtung angezeigt werden, insbesondere, ob die Spannung am Port gerade abgeschaltet oder eingeschaltet ist.

Nachfolgend wird eine Möglichkeit beschrieben, wie die elektronische Einrichtung schaltungstechnisch realisiert werden kann. Hierzu wird auf das vorstehend geschilderte Ausführungsbeispiel Bezug genommen.

Aus dem VGA- Eingangssignal wird das V- Sync- Signal ausgekoppelt. Durch einen ersten integrierten Schaltkreis (IC) erfolgt eine Pegelanpassung. Ein integrierter Schaltkreis ist insbesondere eine auf einem Substrat, beispielsweise einem Halbleitersubstrat, untergebrachte elektronische Schaltung. Die elektronische Schaltung besteht insbesondere aus elektronischen Bauelementen mit Verdrahtung. Von dem integrierten Schaltkreis wird das Signal einem RC-Glied zugeführt. Unter einem RC-Glied ist generell eine Schaltung zu verstehen, die aus einem ohmschen Widerstand und einem Kondensator aufgebaut ist. Nun liegt das Signal an der Basis eines ersten Schalttransistors an. Durch einen Neustart der Rechnereinrichtung wird ein Signalwechsel erzeugt. Dadurch ändert sich der Signalpegel an der Basis des Schalttransistors. Der Schalttransistor wird kurz leitend und triggert einen zweiten integrierten Schaltkreis. Die Verzögerungszeit des zweiten integrierten Schaltkreises wird über die Zeitschaltungseinrichtung eingestellt. Dazu kann die Zeitschaltungseinrichtung beispielsweise in Potentiometer aufweisen. Ein Potentiometer ist insbesondere ein elektronisches Widerstandsbauelement, dessen Widerstandwerte veränderbar sind. der Zweite integrierte Schaltkreis kann eine Anzeigeeinrichtung und eine Schaltereinrichtung innerhalb der elektronischen Einrichtung steuern. Die Schaltereinrichtung kann dabei als ein dritter integrierter Schaltkreis ausgebildet sein. Die Schaltereinrichtung bleibt nur solange geöffnet, bis der zweite integrierte Schaltkreis wieder in Ruhelage ist. Danach wird das Schalterelement wieder geschlossen. Alle VGA-Signale werden eins zu eins weitergeleitet und stehen beispielsweise für einen Monitoranschluss zur Verfügung.

Vorzugsweise ist die elektronische Einrichtung zum Abschalten und Wiedereinschalten einer Betriebsspannung an einem USB-Port zum Verbinden einer USB-Einrichtung mit einer Rechnereinrichtung ausgebildet. Dabei weist die elektronische Einrichtung insbesondere einen USB-IN-Anschluss und einen USB-OUT-Anschluss auf. Bei dem USB-IN-Anschluss handelt es sich insbesondere um den USB-Eingang, während es sich bei dem USB-OUT-Anschluss insbesondere um den USB-Ausgang handelt.

Die Spannungsversorgung der elektronischen Einrichtung kann insbesondere über den USB-IN-Anschluss erfolgen, so dass dadurch keine zusätzliche externe Spannungsversorgung notwendig ist. Es ist jedoch auch denkbar, dass die elektronische Einrichtung oder daran angeschlossene Geräte, beispielsweise USB-Geräte, mit einer eigenen Stromquelle verbunden sind oder über eine solche verfügen. Dies kann beispielsweise dann der Fall sein, wenn die angeschlossenen elektronischen Geräte, beispielsweise USB-Geräte, einen erhöhten Strombedarf haben und somit über eine eigene Spannungsquelle versorgt werden.

Gemäß einem zweiten Aspekt der Erfindung wird ein Verfahren zum automatischen Abschalten und verzögerten Wiedereinschalten einer Betriebsspannung an einem Port zum Verbinden eines elektronischen Geräts mit einer Rechnereinrichtung, insbesondere an einem USB-Port zum Verbinden einer USB-Einrichtung mit einer Rechnereinrichtung, bereitgestellt, wobei das Verfahren insbesondere mittels einer wie vorstehend beschriebenen erfindungsgemäßen elektronischen Einrichtung durchgeführt werden kann. Alles im Zusammenhang mit der elektronischen Einrichtung Gesagte gilt somit vollumfänglich auch im Zusammenhang mit dem erfindungsgemäßen Verfahren, und umgekehrt. Das Verfahren ist erfindungsgemäß durch folgende Schritte gekennzeichnet:
a) Über eine Detektoreinrichtung wird ein Signal zum Steuern einer elektronischen Einrichtung zum automatischen Abschalten und verzögerten Wiedereinschalten einer Betriebsspannung aus einem von der Rechnereinrichtung abgehenden Steuersignal ausgekoppelt. Insbesondere kann über die Detektoreinrichtung ein Signal in Form eines Synchronisationssignals, insbesondere eines V-Sync-Signals, aus einem VGA-Signal ausgekoppelt werden.
b) Das ausgekoppelte Signal wird in ein Steuersignal zum Steuern der elektronischen Einrichtung, insbesondere in ein Signal zum Steuern einer Schaltereinrichtung in der elektronischen Einrichtung, aufbereitet.
c) Durch Steuern der elektronischen Einrichtung wird die Betriebsspannung am Port abgeschaltet.
d) Nach einer durch eine, insbesondere einstellbare, Zeitschalungseinrichtung vorgegebenen Zeitverzögerung wird durch Steuern der elektronischen Einrichtung die Betriebsspannung am Port wieder eingeschaltet.

Insbesondere ist dabei vorgesehen, dass das Verfahren zum automatischen Abschalten und Wiedereinschalten einer Betriebsspannung an einem Port zum Verbinden eines elektronischen Geräts mit einer Rechnereinrichtung während eines Neustarts der Rechnereinrichtung ausgebildet ist.

Die Erfindung wird nun anhand eines Ausführungsbeispiels unter Bezugnahme auf die beiliegenden Zeichnungen näher erläutert. Es zeigen
- Figur 1: in schematischer Darstellung eine erfindungsgemäße elektronische Einrichtung in Verbindung mit einer Rechnereinrichtung und einem daran anzuschließenden elektronischen Gerät;
- Figur 2: in schematischer Darstellung eine Funktionsbeschreibung der erfindungsgemäßen elektronischen Einrichtung; und
- Figur 3: in schematischer Darstellung eine Schaltungsbeschreibung der erfindungsgemäßen elektronischen Einrichtung.

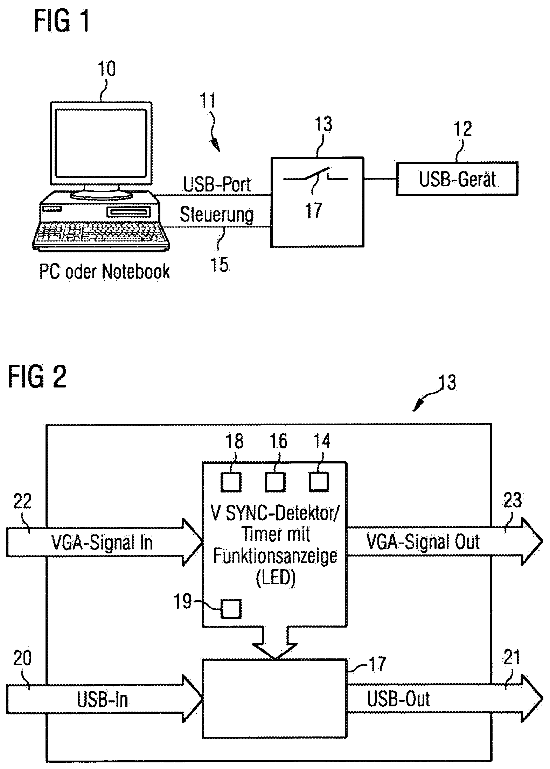

In Figur 1 ist eine Rechnereinrichtung 10 dargestellt, beispielsweise ein Personal Computer, eine Notebook oder dergleichen. Die Rechnereinrichtung 1 verfügt über einen Port 11, im vorliegenden Beispiel einen USB-Port, über den ein elektronisches Gerät 12, beispielsweise ein USB-Gerät, mit der Rechnereinrichtung 10 verbunden werden kann.

Nach einem Neustart (Reboot) der Rechnereinrichtung 10 ist es bisher so, dass die Betriebsspannung an dem USB-Port 11 erhalten bleibt. Das angeschlossene USB-Gerät 12, beispielsweise ein Daten-Stick, wird weiterhin mit Spannung versorgt. Eine fehlerhafte Kommunikation des USB-Gerätes 12 mit der Rechnereinrichtung 10 kann somit nicht durch einen Neustart aufgehoben werden. Bisher war es deshalb notwendig, die Spannungsversorgung des USB-Gerätes 12 zu trennen, was nur durch Abziehen des USB-Gerätes 12 vom Port 11 oder durch Abschaltung der Rechnereinrichtung 10 erreicht werden konnte.

Um diese Nachteile zu umgehen, ist nunmehr eine elektronische Einrichtung 13 zum Abschalten und Wiedereinschalten einer Betriebsspannung am Port 11 vorgesehen.

Die Einrichtung 13 ist in Figur 1 als separates Bauteil dargestellt, wobei das elektronische Gerät 12 und die Rechnereinrichtung 10 über geeignete Schnittstellen, unter anderem den Port 11, mit der elektronischen Einrichtung 13 verbunden sind. Beispielsweise kann die elektronische Einrichtung aber auch als Bestandteil der Rechnereinrichtung 10 oder des elektronischen Geräts 12 vorliegen. Die elektronische Einrichtung 13 stellt insbesondere, zumindest funktional, das Ende des Ports 11 dar, da das elektronische Gerät 12 mit der elektronischen Einrichtung 13 verbunden wird, was in größerem Detail in Figur 2 dargestellt ist, und da die Verbindung des elektronischen Geräts 12 mit der Rechnereinrichtung 10 über die elektronische Einrichtung 13 erfolgt.

Wie insbesondere auch aus der Figur 2 ersichtlich ist, weist die elektronische Einrichtung 13 eine Detektoreinrichtung 14 zum Auskoppeln eines Signals zum Steuern der elektronischen Einrichtung 13 aus einem von der Rechnereinrichtung 10 abgehenden Steuersignal 15 auf. Die Detektoreinrichtung 14 kann beispielsweise in Form einer Detektorschaltung vorliegen. Bei dem von der Rechnereinrichtung 10 abgehenden Steuersignal 15 kann es sich beispielsweise um ein VGA-Signal handeln. Bei dem von der Detektoreinrichtung 14 aus dem VGA-Signal ausgekoppelten Signal kann es sich beispielsweise um das V-Sync-Signal handeln. Weiterhin vorgesehen ist eine elektronische Schaltung 16 zum Aufbereiten des erfassten Signals in ein Steuersignal für die elektronische Einrichtung 13. Das detektierte Signal wird über diese weitere elektronische Schaltung 16 aufbereitet und steuert dann anschließend die elektronische Einrichtung 13. Beispielsweise kann dazu vorgesehen sein, dass die elektronische Schaltung 16 zum Aufbereiten des erfassten Signals in ein Steuersignal zum Steuern einer Schaltereinrichtung 17 in der elektronischen Einrichtung 13 ausgebildet ist. Weiterhin vorgesehen ist eine, insbesondere einstellbare, Zeitschaltungseinrichtung 18 zum Einstellen einer Zeitverzögerung für das Wiedereinschalten der Betriebsspannung. Zur Darstellung des aktuellen Funktionsstatus der elektronischen Einrichtung 13 nach außen ist eine Anzeigeeinrichtung 19 in Form einer LED vorgesehen.

Nachfolgend wird nun die Funktionsweise der elektronischen Einrichtung 13, bei der es sich im vorliegenden Ausführungsbeispiel um eine Art Schaltungseinrichtung handelt, in größerem Detail beschrieben, wobei insbesondere auf die Figur 2 Bezug genommen wird.

Die elektronische Einrichtung 13 weist einen USB-Eingang 20, den USB-IN-Anschluss, sowie einen USB-Ausgang 21, den USB-OUT-Anschluss, auf. Die gesamte Spannungsversorgung der hier beschriebenen Schaltung erfolgt über den USB-IN-Anschluss 20, wodurch keine zusätzliche externe Spannungsversorgung notwendig ist.

Weiterhin weist die elektronische Einrichtung 13 einen Eingang 22 für das Steuersignal 15 - wie insbesondere auch in Figur 1 gezeigt - auf, wobei es sich im vorliegenden Ausführungsbeispiel insbesondere um einen VGA-Eingang, den VGA-Signal-IN handelt. Ebenso ist ein Ausgang 23 für das Steuersignal 15 vorgesehen, wobei es sich im vorliegenden Ausführungsbeispiel insbesondere um einen VGA-Ausgang, den VGA-Signal-OUT handelt.

Aus dem über den VGA-Signal-IN 22 eintretenden VGA-Signal wird durch die Detektoreinrichtung 14 das V-Sync-Signal ausgekoppelt. Alle VGA-Signale werden eins zu eins zum VGA-Signal-OUT 23 weitergeleitet und stehen dort für einen Monitoranschluss zur Verfügung. Das detektierte V-Sync-Signal wird über eine weitere elektronische Schaltung 16 aufbereitet und steuert über eine einstellbare Zeitschaltung 18 die elektronische Schaltereinrichtung 17.

Die elektronische Schaltereinrichtung 17 unterbricht, beispielsweise nach erfolgtem Neustart der Rechnereinrichtung 10, die Spannungsversorgung am Port 11, insbesondere am USB-Ausgang 21, gemäß der eingestellten Zeitverzögerung, beispielsweise für etwa achtzehn Sekunden. Der Status wird über die Anzeigeeinrichtung 19 angezeigt.

Somit wird gewährleistet dass erst wieder Betriebsspannung am USB-Ausgang 21 zur Verfügung steht, wenn das Betriebssystem schon weitestgehend gebootet hat. Durch die vorliegende Erfindung wird nunmehr ein automatisches Abschalten und verzögertes Einschalten der Betriebsspannung an einem USB-Port 11 nach einem Neustart der Rechnereinrichtung 10 ermöglicht.

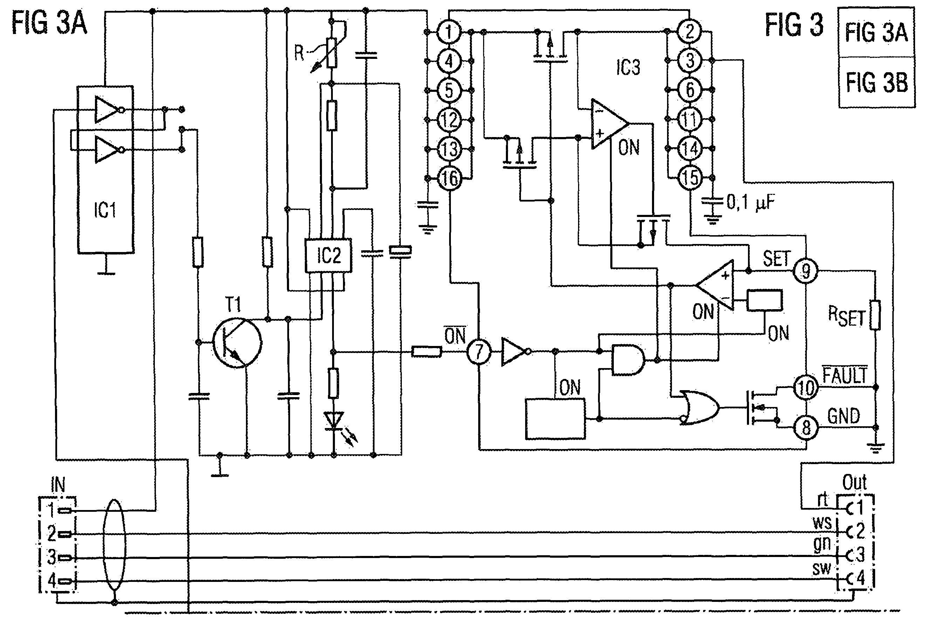

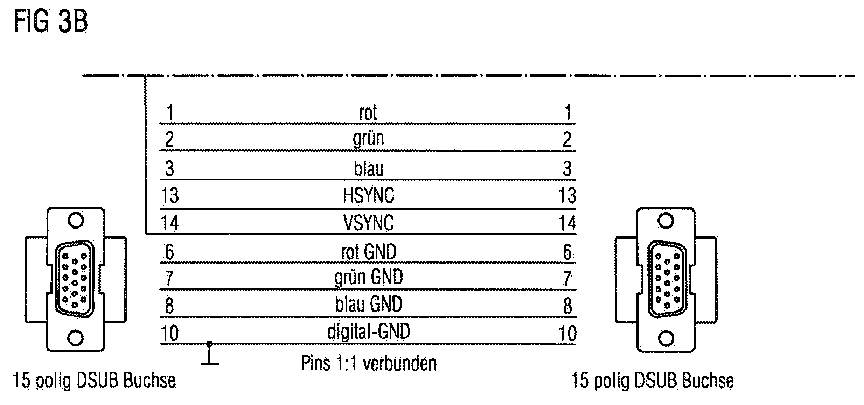

In Figur 3 ist schematisch eine Schaltungsanordnung der erfindungsgemäßen elektronischen Einrichtung dargestellt.

Die gesamte Spannungsversorgung der hier beschriebenen Schaltung erfolgt über den USB-IN-Anschluss. Dadurch ist keine zusätzliche externe Spannungsversorgung notwendig.

Aus dem VGA- Eingangssignal wird das V- Sync- Signal ausgekoppelt. Nach erfolgter Pegelanpassung durch einen ersten integrierten Schaltkreis, das IC1, wird das Signal einem RC-Glied zugeführt und liegt nun an der Basis des Schalttransistors T1. Durch einen Neustart (Reboot) wird ein Signalwechsel erzeugt. Dadurch ändert sich der Signalpegel an der Basis des Schalttransistors T1. Der Schalttransistors T1 wird kurz leitend und triggert einen zweiten integrierten Schaltkreis, das IC2 in Form eines Monoflops. Die Verzögerungszeit des Monoflops IC2 wird über das Potentiometer R eingestellt, zum Beispiel auf 18 Sekunden. Das IC2- Ausgangssignal steuert die Anzeigeeinrichtung, beispielsweise eine LED, und die Schaltereinrichtung, die beispielsweise in Form eines dritten integrierten Schaltkreises, des IC3, ausgebildet ist. Die Schaltereinrichtung bleibt nur solange geöffnet bis das Monoflop IC2 wieder in Ruhelage ist, danach ist die Schaltereinrichtung wieder geschlossen.

Alle VGA-Signale werden eins zu eins weitergeleitet und stehen für einen Monitoranschluss zur Verfügung.

Gemäß der vorliegenden Erfindung werden eine elektronische Einrichtung sowie ein Verfahren zum Abschalten und Wiedereinschalten einer Betriebsspannung an einem Port zum Verbinden eines elektronischen Geräts mit einer Rechnereinrichtung, insbesondere an einem USB-Port zum Verbinden einer USB-Einrichtung mit einer Rechnereinrichtung, beschrieben, insbesondere nach einem Neustart der Rechnereinrichtung. Insbesondere soll erreicht werden, dass bei einem Neustart einer Rechnereinrichtung auch die Betriebsspannung am Port auf einfache Weise abgeschaltet und wieder eingeschaltet werden kann. Dazu ist folgendes vorgesehen: a) über eine Detektoreinrichtung wird ein Signal zum Steuern einer elektronischen Einrichtung zum automatischen Abschalten und verzögerten Wiedereinschalten einer Betriebsspannung aus einem von der Rechnereinrichtung abgehenden Steuersignal ausgekoppelt; b) das ausgekoppelte Signal wird in ein Steuersignal zum Steuern der elektronischen Einrichtung, insbesondere in ein Signal zum Steuern einer Schaltereinrichtung in der elektronischen Einrichtung, aufbereitet; c) durch Steuern der elektronischen Einrichtung wird die Betriebsspannung am Port abgeschaltet; d) nach einer durch eine, insbesondere einstellbare, Zeitschaltungseinrichtung vorgegebenen Zeitverzögerung wird durch Steuern der elektronischen Einrichtung die Betriebsspannung am Port wieder eingeschaltet.

### Bezugszeichenliste

- 10: Rechnereinrichtung
- 11: Port (USB-Port)
- 12: Elektronisches Gerät (USB-Gerät)
- 13: Elektronische Einrichtung zum Abschalten und verzögerten Wiedereinschalten einer Betriebsspannung
- 14: Detektoreinrichtung
- 15: Steuersignal
- 16: Elektronische Schaltung zum Aufbereiten des erfassten Signals
- 17: Schaltereinrichtung
- 18: Zeitschaltungseinrichtung
- 19: Anzeigeeinrichtung
- 20: USB-Eingang (USB-IN-Anschluss)
- 21: USB-Ausgang (USB-OUT-Anschluss)
- 22: Eingang Steuersignal (VGA-Signal-IN)
- 23: Ausgang Steuersignal (VGA-Signal-OUT)

## Patentansprüche

1. Elektronische Einrichtung (13) zum Abschalten und Wiedereinschalten einer Betriebsspannung an einem Port (11) zum Verbinden eines elektronischen Geräts (12) mit einer Rechnereinrichtung (10), **dadurch gekennzeichnet, dass** die elektronische Einrichtung (13) zum automatischen Abschalten und zum automatischen verzögerten Wiedereinschalten der Betriebsspannung an dem Port (11) ausgebildet ist, dass die elektronische Einrichtung (13) dazu eine Detektoreinrichtung (14) zum Auskoppeln eines Signals zum Steuern der elektronischen Einrichtung (13) aus einem von der Rechnereinrichtung (10) abgehenden Steuersignal (15) aufweist, dass die elektronische Einrichtung (13) eine elektronische Schaltung (16) zum Aufbereiten des ausgekoppelten Signals in ein Steuersignal für die elektronische Einrichtung (13) aufweist und dass die elektronische Einrichtung eine Zeitschaltungseinrichtung (18) zum Einstellen einer Zeitverzögerung für das Wiedereinschalten der Betriebsspannung aufweist.

2. Elektronische Einrichtung nach Anspruch 1, **dadurch gekennzeichnet, dass** die elektronische Einrichtung (13) zum Abschalten und Wiedereinschalten einer Betriebsspannung an einem USB-Port zum Verbinden einer USB-Einrichtung mit der Rechnereinrichtung (10) ausgebildet ist.

3. Elektronische Einrichtung nach Anspruch 1, **dadurch gekennzeichnet, dass** die Detektoreinrichtung (14) zum Auskoppeln eines Signals in Form eines Synchronisationssignals aus einem VGA-Signals ausgebildet ist.

4. Elektronische Einrichtung nach Anspruch 3, **dadurch gekennzeichnet, dass** die Detektoreinrichtung (14) zum Auskoppeln eines Signals in Form eines eines V-Sync-Signals aus einem VGA-Signals ausgebildet ist.

5. Elektronische Einrichtung nach Anspruch 1, **dadurch gekennzeichnet, dass** die elektronische Schaltung (16) zum Aufbereiten des erfassten Signals in ein Steuersignal zum Steuern einer Schaltereinrichtung (17) in der elektronischen Einrichtung (13) ausgebildet ist.

6. Elektronische Einrichtung nach einem der Ansprüche 1 bis 5, **dadurch gekennzeichnet, dass** die Zeitschalteinrichtung (18) als einstellbare Zeitschaltungseinrichtung (18) ausgebildet ist.

7. Elektronische Einrichtung nach einem der Ansprüche 1 bis 6, **dadurch gekennzeichnet, dass** eine Anzeigeeinrichtung (19) zum Anzeigen des Funktionsstatus der elektronischen Einrichtung (13) vorgesehen ist.

8. Elektronische Einrichtung nach einem der Ansprüche 2 bis 7, **dadurch gekennzeichnet, dass** diese zum Abschalten und Wiedereinschalten einer Betriebsspannung an einem USB-Port (11) zum Verbinden einer USB-Einrichtung (12) mit einer Rechnereinrichtung (10) ausgebildet ist und dass diese einen USB-IN-Anschluss (20) und einen USB-OUT-Anschluss (21) aufweist.

9. Verfahren zum automatischen Abschalten und verzögerten Wiedereinschalten einer Betriebsspannung an einem Port (11) zum Verbinden eines elektronischen Geräts (12) mit einer Rechnereinrichtung (10), **gekennzeichnet durch** folgende Schritte:
a) über eine Detektoreinrichtung (14) wird ein Signal zum Steuern einer elektronischen Einrichtung (13) zum automatischen Abschalten und verzögerten Wiedereinschalten einer Betriebsspannung aus einem von der Rechnereinrichtung (10) abgehenden Steuersignal (15) ausgekoppelt;
b) das ausgekoppelte Signal wird in ein Steuersignal zum Steuern der elektronischen Einrichtung (13), aufbereitet;
c) **durch** Steuern der elektronischen Einrichtung (13) wird die Betriebsspannung am Port (11) abgeschaltet;
d) nach einer **durch** eine Zeitschaltungseinrichtung (18) vorgegebene Zeitverzögerung wird **durch** Steuern der elektronischen Einrichtung (13) die Betriebsspannung am Port (11) wieder eingeschaltet.

10. Verfahren nach Anspruch 9, **dadurch gekennzeichnet, dass** dieses zum automatischen Abschalten und Wiedereinschalten einer Betriebsspannung an einem Port (11) zum Verbinden eines elektronischen Geräts (12) mit einer Rechnereinrichtung (10) während eines Neustarts der Rechnereinrichtung (10) ausgebildet ist.

11. Verfahren nach Anspruch 9, **dadurch gekennzeichnet, dass** dieses zum automatischen Abschalten und verzögerten Wiedereinschalten einer Betriebsspannung an einem USB-Port zum Verbinden einer USB-Einrichtung mit der Rechnereinrichtung ausgebildet ist.

12. Verfahren nach Anspruch 9, **dadurch gekennzeichnet dass** dieses unter Verwendung einer elektronischen Einrichtung (13) nach einem der Ansprüche 1 bis 8 durchgeführt wird.

13. Verfahren nach Anspruch 9, **dadurch gekennzeichnet, dass** das ausgekoppelte Signal in ein Signal zum Steuern einer Schaltereinrichtung (17) in der elektronischen Einrichtung (13 aufbereitet wird.

14. Verfahren nach Anspruch 9, **dadurch gekennzeichnet**, das nach einer durch eine einstellbare Zeitschaltungseinrichtung (18) vorgegebene Zeitverzögerung durch Steuern der elektronischen Einrichtung (13) die Betriebsspannung am Port (11) wieder eingeschaltet wird.

## Claims

1. An electronic device (13) for switching off and switching on an operating voltage at a port (11) for connecting an electronic apparatus (12) with a computer device (10), **characterized in that** the electronic device (13) is adapted for automatically switching off and delayed switching on the operating voltage at said port (11), that the electronic device (13) therefore comprises a detector device (14) for decoupling a signal for controlling the electronic device (13) from one of the computer device (10) outgoing control signal (15), that the electronic device (13) comprises an electronic circuit (16) for processing the decoupled signals into a control signal for the electronic device (13), and that the electronic device (13) comprises a timer device (18) for setting a time delay for the switching on of the operating voltage.

2. The electronic device according to claim 1, **characterized in that** the electronic device (13) is provided for switching off and switching on an operating voltage at a USB-port for connecting an USB-apparatus with said computer device (10).

3. The electronic device according to claim 1, **characterized in that** the detector device (14) is provided for decoupling a signal in the form of a synchronization signal out of a VGA-signal.

4. The electronic device according to claim 3, **characterized in that** the detector device (14) is provided for decoupling a signal in the form of a V-Sync-signal out of a VGA-signal.

5. The electronic device according to claim 1, **characterized in that** the electronic circuit (16) for processing the decoupled signal into a control signal is provided for controlling a switching means in the electronic device (13).

6. The electronic device according to anyone of claims 1 to 5, **characterized in that** the timer device (18) is provided as an adjustable timer means (18)

7. The electronic device according to anyone of claims 1 to 6, **characterized in that** a display device (19) for displaying the functional status of the electronic device (13) is provided

8. The electronic device according to anyone of claims 2 to 7, **characterized in that** the electronic device is provided for switching off and switching on an operating voltage at a USB-port (11) for connecting an USB-apparatus (12) with a computer device (10) and that the electronic device comprises a USB-IN-connection (20) and a USB-Out-connection (21).

9. A method for automatically switching off and delayed switching on an operating voltage at a port (11) for connecting an electronic apparatus (12) with a computer device (10), **characterized by** the following steps:
a) by means of a detector device (14) a signal for controlling an electronic device (13) for automatically switching off and delayed switching on an operating voltage is decoupled from one of the computer device (10) outgoing control signal (15);
b) the decoupled signal is processed into a control signal for controlling the electronic device (13);
c) by means of controlling the electronic device (13) the operating voltage is switched off at said port (11);
d) after a time delay which is predetermined by a timer device (18) the operating voltage at port (11) is switched on again by controlling the electronic device (13).

10. The method according to claim 9, **characterized in that** said method is provided for automatically switching off and switching on an operating voltage at a port (11) for connecting an electronic apparatus (12) with a computer device (10) during a restart of said computing device (10).

11. The method according to claim 9, **characterized in that** the method is provided for automatically switching off and delayed switching on an operating voltage at a USB-port for connecting an USB-apparatus with said computer device.

12. The method according to claim 9, **characterized in that** the method is performed by use of an electronic device (13) according to anyone of claims 1 to 8.

13. The method according to claim 9, **characterized in that** the decoupled signal is processed into a signal for controlling a switching means (17) in said electronic device (13).

14. The method according to claim 9, **characterized in that** after a time delay which is predetermined by means of an adjustable timer device (18) the operating voltage at port (11) is switched on again by controlling the electronic device (13).

## Revendications

1. Dispositif électronique (13) servant à mettre hors tension et à remettre sous tension une tension de fonctionnement au niveau d'un port (11) servant à raccorder un appareil électronique (12) à un dispositif de calcul (10), **caractérisé en ce que** le dispositif électronique (13) est réalisé afin de mettre hors tension de manière automatique et afin de remettre sous tension de manière automatique et de manière différée la tension de fonctionnement au niveau du port (11), **en ce que** le dispositif électronique (13) présente en supplément un dispositif détecteur (14) servant à découpler un signal servant à commander le dispositif électronique (13) à partir d'un signal de commande (15) provenant du dispositif de calcul (10), **en ce que** le dispositif électronique (13) présente un circuit électronique (16) servant à fournir le signal découplé en un signal de commande pour le dispositif électronique (13), et **en ce que** le dispositif électronique présente un dispositif de temporisation (18) servant à régler un départ différé dans le temps pour la remise sous tension de la tension de fonctionnement.

2. Dispositif électronique selon la revendication 1, **caractérisé en ce que** le dispositif électronique (13) est réalisé afin de mettre hors tension et de remettre sous tension une tension de fonctionnement au niveau d'un port USB afin de raccorder un dispositif USB au dispositif de calcul (10).

3. Dispositif électronique selon la revendication 1, **caractérisé en ce que** le dispositif détecteur (14) est réalisé afin de découpler un signal sous la forme d'un signal de synchronisation à partir d'un signal VGA.

4. Dispositif électronique selon la revendication 3, **caractérisé en ce que** le dispositif détecteur (14) est réalisé afin de découpler un signal sous la forme d'un signal Sync-V à partir d'un signal VGA.

5. Dispositif électronique selon la revendication 1, **caractérisé en ce que** le circuit électronique (16) est réalisé afin de fournir le signal détecté en un signal de commande servant à commander un dispositif commutateur (17) dans le dispositif électronique (13).

6. Dispositif électronique selon l'une quelconque des revendications 1 à 5, **caractérisé en ce que** le dispositif de temporisation (18) est réalisé sous la forme d'un dispositif de temporisation (18) réglable.

7. Dispositif électronique selon l'une quelconque des revendications 1 à 6, **caractérisé en ce qu'**un dispositif d'affichage (19) est prévu afin d'afficher le statut de fonctionnement du dispositif électronique (13).

8. Dispositif électronique selon l'une quelconque des revendications 2 à 7, **caractérisé en ce que** ce dernier est réalisé afin de mettre hors tension et de remettre sous tension une tension de fonctionnement au niveau d'un port USB (11) afin de raccorder un dispositif USB (12) à un dispositif de calcul (10), et **en ce que** ce dernier présente une borne d'entrée USB (20) et une borne de sortie USB (21).

9. Procédé servant à mettre hors tension de manière automatique et à remettre sous tension de manière différée une tension de fonctionnement au niveau d'un port (11) afin de raccorder un appareil électronique (12) à un dispositif de calcul (10), **caractérisé par** les étapes suivantes :
a) un signal servant à commander un dispositif électronique (13) servant à mettre hors tension de manière automatique et servant à remettre sous tension de manière différée une tension de fonctionnement est découplé, par l'intermédiaire d'un dispositif détecteur (14), à partir d'un signal de commande (15) provenant du dispositif de calcul (10) ;
b) le signal découplé est fourni en un signal de commande servant à commander le dispositif électronique (13) ;
c) la tension de fonctionnement est mise hors tension au niveau du port (11) en commandant le dispositif électronique (13) ;
d) la tension de fonctionnement est remise sous tension au niveau du port (11) après un départ différé dans le temps prédéfini par un dispositif de temporisation (18) en commandant le dispositif électronique (13).

10. Procédé selon la revendication 9, **caractérisé en ce que** ce dernier est réalisé afin de mettre hors tension de manière automatique et de remettre sous tension une tension de fonctionnement au niveau d'un port (11) afin de raccorder un appareil électronique (12) à un dispositif de calcul (10) au cours d'un nouveau démarrage du dispositif de calcul (10).

11. Procédé selon la revendication 9, **caractérisé en ce que** ce dernier est réalisé afin de mettre hors tension de manière automatique et de remettre sous tension de manière différée une tension de fonctionnement au niveau d'un port USB afin de raccorder un dispositif USB au dispositif de calcul.

12. Procédé selon la revendication 9, **caractérisé en ce que** ce dernier est exécuté en utilisant un dispositif électronique (13) selon l'une quelconque des revendications 1 à 8.

13. Procédé selon la revendication 9, **caractérisé en ce que** le signal découplé est fourni en un signal servant à commander un dispositif commutateur (17) dans le dispositif électronique (13).

14. Procédé selon la revendication 9, **caractérisé en ce que** la tension de fonctionnement est remise sous tension au niveau du port (11) après un départ différé dans le temps prédéfini par un dispositif de temporisation (18) réglable en commandant le dispositif électronique (13).
